# EUROPÄISCHE PATENTSCHRIFT

(11) **EP 0 797 626 B1**
(45) Veröffentlichungstag und Bekanntmachung des Hinweises auf die Patenterteilung: **05.08.1998**
(21) Anmeldenummer: 95942075.3
(22) Anmeldetag: 07.12.1995
(51) Int. Cl.: C08L 53/02, C08L 25/06

(54) **VERFAHREN ZUR HERSTELLUNG VON SCHLAGZÄH MODIFIZIERTEN POLYSTYROL-FORMMASSEN**
METHOD FOR PREPARATION OF IMPACT-RESISTANT MODIFIED POLYSTYRENE MOLDING COMPOUNDS
PROCEDE POUR LA PREPARATION DE MATIERES DE MOULAGE EN POLYSTYRENE MODIFIE POUR RESISTER AUX CHOCS

(30) Priorität: 17.12.1994 DE 4445141
(43) Veröffentlichungstag der Anmeldung: 01.10.1997
(73) Patentinhaber: BASF AKTIENGESELLSCHAFT, 67056 Ludwigshafen (DE)
(72) Erfinder: KNOLL, Konrad, D-67069 Ludwigshafen (DE); LOTH, Wolfgang, D-67098 Bad Dürkheim (DE); FISCHER, Wolfgang, D-67067 Ludwigshafen (DE); GAUSEPOHL, Hermann, D-67112 Mutterstadt (DE)
(86) Internationale Anmeldenummer: EP9504809
(87) Internationale Veröffentlichungsnummer: WO9618682

(56) Entgegenhaltungen:
- EP-A- 0 341 620
- FR-A- 2 146 581
- US-A- 3 903 202
- DATENBANK "CHEMICAL ABSTRACTS" (DATEN- ANBIETER: STN): Abs. 119: 271 931, Colombus, OH, USA; & D. PRIDDY et al.: "Development of continuous anionic styrene
- DATENBANK "CHEMICAL ABSTRACTS" (DATEN- ANBIETER: STN): Abs. 119: 96 777, Colombus OH, USA; & W. MICHAELI et al.:" Synthesis of polystyrene and styrene copolymers by

## Beschreibung

Die Erfindung betrifft schlagzäh modifizierte Formmassen auf der Grundlage von Polymeren des Styrols und anderer vinylaromatischer Verbindungen, die einen besonders geringen Gehalt an niedermolekularen Nebenprodukten und restlichem Monomeren aufweisen und ein Verfahren auf der Grundlage der anionischen Polymerisation zu ihrer Herstellung. Vorzugsweise werden Formmassen mit weniger als 50 ppm, insbesondere weniger als 10 ppm Restmonomergehalt und einem Gehalt an Oligomeren mit Molgewichten unter 1000 von nicht mehr als 100 ppm erhalten.

Die Erfindung betrifft auch die Verwendung dieser Formmassen zur Herstellung von Folien, Platten oder Formkörpern.

In der nachstehenden Beschreibung wird der Begriff "Styrol" bzw. "Butadien" gebraucht werden, auch wenn deren technische Äquivalente infragekommen; es versteht sich, daß die Erfindung ebensogut anwendbar ist auf Formmassen aus Derivaten des Styrols wie alpha-Methylstyrol oder 2-, 3- oder 4-Methylstyrol, tert.-Butylstyrol, 1,1-Diphenylethylen oder deren Mischungen und z.B. Isopren anstelle von Butadien.

Schlagzäh modifiziertes Polystyrol (HIPS) wird technisch bisher ausschließlich durch radikalisch ausgelöste Polymerisation von Styrol in Gegenwart eines gelösten Kautschuks hergestellt, wobei der Kautschuks selbst zum Ausgangspunkt wachsender Styrolketten wird (Pfropfung; vgl. DE-A-40 46 718; US-A-3 903 202) und auf diese Weise mit dem Styrolhomopolymeren verträglich wird. Die technisch üblichen Verfahren sind sehr aufwendig und werden gewöhnlich in mehreren, aufeinanderfolgenden Reaktionsapparaten ausgeführt, nach den vorstehenden Dokumenten z.B. in einer 2-Kessel-2-Turm-Kaskade bzw. in einer Dreiturmkaskade. Auch die Verwendung liegender Reaktoren (DE-A-24 44 650) ist schon vorgeschlagen worden.

Alle Verfahren der radikalischen Polymerisation haben den Nachteil, daß die Polymerisation unvollständig verläuft und größere Mengen an Oligomeren als Nebenprodukte gebildet werden, die zusammen mit dem restlichen Monomeren nach der Polymerisation in einem aufwendigen Reinigungsverfahren abgetrennt werden müssen, da vor allem monomeres Styrol wegen seines intensiven Geruchs nicht in der fertigen Formmasse verbleiben kann. Ein Restgehalt von etwa 100 bis 200 ppm an Styrol wurde bisher als unvermeidlich hingenommen.

Es ist bekannt, Styrol anionisch zu polymerisieren (EP-A-176 611; US-A-3 035 033; FR-A-2 146 581), wobei es gelingt, bis zu praktisch vollständigem Umsatz zu polymerisieren. Ein Überblick über die anionische Polymerisation insbesondere von Styrol aus jüngerer Zeit findet sich bei Priddy (J. Polym. Eng. **10**, 334 (1991)).

Nach den bekannten Verfahren der anionischen Polymerisation können jedoch nur Polymerisate hergestellt werden, die nicht schlagzäh modifiziert sind: Da bei der anionischen Polymerisation keine Pfropfung des anwesenden Kautschuk stattfindet, kann der Kautschuk zu dem umgebenden Styrol-Homopolymeren (der Matrix) keine Wechselbeziehungen eingehen und man erhält nur Produkte mit völlig unzureichendem mechanischem Verhalten.

Es bestand deshalb die Aufgabe, ein Verfahren zur kontinuierlichen Herstellung von schlagzäh modifizierten Formmassen auf der Grundlage von Polystyrol zu finden, die in einer Matrix des Styrol-Homopolymeren ein kautschukelastisches Styrol-Butadien-Blockcopolymerisat enthalten, wobei man das Verhältnis der Reaktionsteilnehmer in den Reaktionszonen I und II so wählt, daß der Butadienanteil im Styrol-Butadien-Blockcopolymerisat 15 bis 80 Gew.-% und in der Formmasse insgesamt 2 bis 50 Gew.-% beträgt.

Die Aufgabe bestand insbesondere darin, schlagzäh modifizierte Formmassen auf der Grundlage von Polystyrol mit einem nur geringen Gehalt an restlichen Monomeren und Oligomeren und hoher thermischer Stabilität und einem mechanischen Verhalten herzustellen, die den entsprechenden radikalisch polymerisierten Formmassen mindestens äquivalent sind.

Das erfindungsgemäße Verfahren besteht im wesentlichen darin, daß man
- Styrol in einer ersten Reaktionszone (I) anionisch und ohne Wärmeaustausch mit der Umgebung - wenn erforderlich unter Zusatz eines Lösungsmittels - bis zum vollständigen Umsatz polymerisiert und die lebenden Kettenenden in an sich bekannter Weise abbricht;
- in einer zweiten, parallel zur ersten betriebenen Reaktionszone (II) Styrol und Butadien unter Verwendung eines geeigneten Lösungsmittels anionisch und isotherm ebenfalls bis zum vollständigen Umsatz zu einem kautschukelastischen Blockcopolymer polymerisiert, dessen lebende Kettenenden entweder unmittelbar oder nach entsprechender Koppelung mittels einer multifunktionellen Verbindung mit einer protonenaktiven Substanz abbricht;
- die beiden Polymerströme in einer Mischzone (III) zusammenführt und gemeinsam in einer weiteren Zone (Entgasungszone) von Lösungsmittel und flüchtigen Bestandteilen befreit.

Es versteht sich, daß das erfindungsgemäße Verfahren vor allem kontinuierlich (fortlaufend) betrieben wird.

Bevorzugt wählt man das Verhältnis der Reaktionsteilnehmer in den Reaktionszonen I und II so, daß die Formmasse schließlich 4 bis 25 Gew.-% Polybutadien enthält.

Ebenfalls bevorzugt ist eine Verfahrensvariante, bei der in der Reaktionszone II Mischungen aus Polybutadien und Styrol-Butadien-Blockcopolymerisat hergestellt werden.

Das Verfahrensprinzip ergibt sich aus dem Folgenden. Es sind zwei parallel betriebene Reaktionsapparate oder -zonen I und II vorhanden, von denen die Zone I im wesentlichen adiabatisch, d.h. unter Erwärmung durch die freigesetzte Reaktionsenthalpie und ohne wesentlichen Wärmeaustausch mit der Umgebung und die Zone II im wesentlichen isotherm, d.h. unter Kühlung und Abfuhr der dort freigesetzten Reaktionsenthalpie betrieben wird. In diesen Zonen werden auf anionischem Weg zwei Polymerströme erzeugt, die in einer Mischzone III zusammengeführt werden. In der adiabatisch betriebenen Zone I wird nur Styrol (oder alpha-Methylstyrol etc.) polymerisiert, dessen Polymere die Matrix der herzustellenden Formmasse bilden sollen. In der Zone II wird der Kautschuk (die sog. Weichkomponente), also das dienhaltige Polymerisat hergestellt. Die örtliche Zugabe von Monomeren und Lösungsmittel kann variieren und richtet sich nach der gewünschten Molekulargewichtsverteilung und der beabsichtigten chemischen Zusammensetzung. Gemischt wird bevorzugt oberhalb des sog. Phaseninversionspunktes, d.h. die zusammengeführten Ströme sind miteinander nicht homogen mischbar. Wegen der Begriffe Phaseninversion und Phaseninversionspunkt wird auf Angew. Makrom. Chem. **58**/**59**, 175 (1977) verwiesen. Bevor die Polymerströme aus den Zonen I und II in die Mischzone eintreten, werden die lebenden Kettenenden zweckmäßigerweise mit protonenaktiven Substanzen abgebrochen.

Jede der Reaktionszonen I und II kann aus einem oder mehreren Rührkesseln, Turmreaktoren oder anderen Apparaten mit mechanischen Rührelementen (z.B. sog. Schleifen- oder Umlaufreaktoren) oder vorteilhaft auch aus statischen Apparaten wie Rohrreaktoren, ggf. mit entsprechenden Einbauten bestehen. Es ist unerheblich, ob man mehrere kleinere Rohrreaktoren hintereinanderschaltet oder ob man große Einzelapparate verwendet. Die Notwendigkeit von Einbauten (statischen Mischern) richtet sich danach, wie zäh das Reaktionsgemisch und wie gut bzw. schlecht demnach der Wärmeaustausch mit der Rohrwand ist.

### Reaktionszone I:

Für die kontinuierlich betriebene anionische, adiabatisch verlaufende Homopolymerisation von Styrol sind besonders zweckmäßig Rohrreaktoren, bei denen am Kopfende das Styrol, getrennt davon der Initiator, dieser zweckmäßig in einem Lösungsmittel zugeführt werden. Prinzipiell können aber auch alle Reaktionsteilnehmer unmittelbar vor dem Eintritt in den Reaktionsapparat vorgemischt werden, vor allem wenn man ohne Lösungsmittel auskommen will. Die Eintrittstemperatur liegt zweckmäßig zwischen Raumtemperatur und 70°C, vorzugsweise zwischen 30°C und 65°C, man kann aber auch eine vorgekühlte Lösung von z.B. 0 bis 20°C verwenden. Die Austrittstemperatur der Polymermischung am Reaktorende hängt im wesentlichen von der Menge des zugesetzten Lösungsmittels ab. Sie liegt auf jeden Fall über 100°C, vorzugsweise zwischen 150 und 360°C. Die verwendeten Apparate sollen so ausgelegt sein, daß der aufgebaute Druck bis zu etwa 25 bar erreichen kann. Man erhält nach dem beschriebenen Verfahren vornehmlich Produkte mit enger Molekulargewichtsverteilung. Um eine breitere Verteilung des Molekulargewichts zu erzielen, kann man den Initiator aufteilen und eine oder mehrere Teilmengen nachgeschalteten Rohrabschnitten zuführen. Auch das Monomere kann in Teilmengen verschiedenen Rohrabschnitten zugeführt werden.

Als Lösungsmittel können die für die anionische Polymerisation üblichen Kohlenwasserstoffe eingesetzt werden. Geeignete Lösungsmittel sind aliphatische, cycloaliphatische oder aromatische Kohlenwasserstoffe, die unter Reaktionsbedingungen flüssig sind und vorzugsweise 4 bis 12 Kohlenstoffatome aufweisen. Beispiele sind Cyclohexan, Methylcyclohexan, Toluol, Ethylbenzol oder Xylol.

Geeignete Initiatoren für die Polymerisation sind die bekannten Kohlenwasserstoffverbindungen des Lithiums (RLi), wobei R für einen aliphatischen, cycloaliphatischen, aromatischen oder aliphatisch-aromatischen Kohlenwasserstoffrest steht. Der Kohlenwasserstoffrest kann 1 bis etwa 12 Kohlenwasserstoffatome aufweisen.

Als Beispiele für Lithiumkohlenwasserstoffe seien genannt: Methyllithium, Ethyllithium, n- oder sec.-Butyllithium, Isopropyllithium, Cyclohexyllithium oder Phenyllithium. Besonders bevorzugt sind n-Butyl- oder sec. Butyllithium.

Um Produkte mit hoher thermischer Stabilität zu erhalten, ist es wesentlich, die "lebenden" Kettenenden abzubrechen und zwar unmittelbar, nachdem das Monomer vollständig umgesetzt ist. Das Abbrechen der lebenden Kettenenden besteht im Umsetzen des noch zur Weiterreaktion fähigen Polymeren mit einer protonenaktiven Substanz, einer Lewis-Säure oder der Behandlung mit einem Kopplungsmittel.

Beispiele für protonenaktive Substanzen bzw. Kopplungsmittel sind Alkohole, Wasser, Epoxide, Aldehyde, Ester, Anhydride, organische Säuren oder Halogenverbindungen wie z.B. Siliziumtetrachlorid.

### Reaktionszone II:

In der Reaktionszone II werden Blockcopolymere von Styrol und Butadien hergestellt. Dabei können auch Mischungen solcher Blockcopolymerer mit Polybutadien erhalten werden. Die Herstellung von Styrol/Butadien-Blockcopolymeren ist an sich bekannt. Als Reaktoren eignen sich die gleichen Apparate, wie sie vorstehend für die Reaktionszone I beschrieben wurden, jedoch wird die Reaktionsenthalpie (die Polymerisationswärme) laufend abgeführt, sodaß eine gleichmäßige Temperatur herrscht. Ein streng isothermes Betriebsverhalten ist aber nicht unbedingt erforderlich.

Besonders geeignet sind Rohrreaktoren, bei denen die Reaktionswärme entweder über eine Mantelkühlung oder über innenliegende Kühlrohre abgeführt wird. Characteristisch für die Erfindung ist es, daß die Herstellung des Polybutadiens und/oder Blockcopolymeren im Gegensatz zur Reaktionszone I auf jeden Fall in Lösung erfolgt. Die Endkonzentration der Polymerlösung am Ausgang der Reaktionszone II liegt dabei i.a. nicht über 60, vorzugsweise nicht über 50 %.

Als Vinylaromaten und Lösungsmittel können dieselben Verbindungen gewählt werden wie für die Reaktionszone I Als Diene können statt Butadien alle Kohlenwasserstoffe mit einer konjugierten C=C-Doppelbindung verwendet werden. Insbesondere eignen sich Butadien, Dimethylbutadien, 1-Phenylbutadien, Isopren und Piperylen sowie Mischungen dieser Verbindungen.

Die Struktur der Blockcopolymerisate kann beliebig gewählt werden. So lassen sich nach dem erfindungsgemäßen Verfahren sowohl Zweiblock- wie Dreiblock-, Multiblock- oder Sternblockcopolymere herstellen, wobei der Übergang zwischen den Blöcken sowohl scharf wie allmählich ("verschmiert") sein kann. Besonders vorteilhaft sind auch Blockcopolymere mit Blockabschnitten, in denen Styrol und Butadien statistisch verteilt copolymerisiert wurden.

Sternblockcopolymere erhält man in bekannter Weise durch sog. Kopplung. Das Kopplungszentrum wird durch die Umsetzung der lebenden anionischen Kettenenden mit einem mehrfunktionellen Kopplungsmittel gebildet. Beispiele für geeignete Verbindungen sind in den US-PSen 3 985 830, 3 280 084, 3 637 554 und 4 091 053 zu finden. Bevorzugt werden epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Der Gewichtsanteil des Butadiens im gesamten Blockcopolymer, bezogen auf die Monomerkombination Styrol/Butadien liegt bei 15 bis 80 %, der Styrolanteil entsprechend bei 85 bis 20 %. Besonders bevorzugt sind Butadien/Styrol-Blockcopolymere mit einer Zusammensetzung aus 25 bis 60 % Butadien und 75 bis 40 % Styrol.

Um beispielsweise ein Sternblockcopolymer aus Polystyrol- und Polybutadienblöcken herzustellen, werden Styrol, ein Lösungsmittel wie Cyclohexan und der Initiator getrennt oder vorgemischt dem Kopfende eines Rohreaktors zugeführt, während Butadien weiter stromabwärts zudosiert wird. Die genaue Dosierstelle des Butadiens richtet sich dabei nach der Polymerisationsgeschwindigkeit des Styrols, die sich über die Polymerisationstemperatur, die Konzentration des Styrols im Lösungsmittel und über die Verweilzeit im Rohreaktor steuern läßt.

Um sog. scharf getrennte Blöcke zu erhalten, muß das Styrol vollständig auspolymerisiert sein, bevor Butadien zudosiert wird. Nach der Zugabe des Butadiens läßt man auch dieses auspolymerisieren. Dann koppelt man die lebenden Kettenden mit Siliciumtetrachlorid, Divinylbenzol oder einem mehrfunktionellen Epoxid, indem man das Kopplungsmittel an einer weiter stromabwärts gerichteten Dosierstelle zufügt. Die genaue Dosierstelle richtet sich nach der Polymerisationsgeschwindigkeit des Butadiens.

Nach der Kopplung werden die lebenden Kettenenden mit einer protonenaktiven Substanz abgebrochen. Der Temperaturbereich für die isotherme Polymerisation liegt zweckmäßig im Bereich von 20 bis 150, bevorzugt zwischen 30 und 120°C. Die Umsetzung wird wegen des Siedepunkts des Butadiens unter überatmosphärischem Druck vorgenommen. Die Drucke liegen i.a. im Bereich von 2 bis 25 bar. Durch Zusatz von Lewis-Basen kann die Umsetzung beschleunigt werden. Als Lewis-Basen werden polare aprotische Verbindungen wie Ether und tertiäre Amine bevorzugt. Beispiele für besonders effektive Ether sind Tetrahydrofuran und aliphatische Polyether wie Diethylenglycoldimethylether. Als tertiäre Amine sind Tributylamin und Pyridin geeignet. Die Lewis-Base wird dem unpolaren Lösungsmittel in einer geringen Menge, z.B. von 0,5 bis 5 Vol.-% zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

In der Mischzone III, die aus einem beliebigen Mischapparat, d.h. sowohl dynamischen Rühraggregaten wie statischen Mischern bestehen kann, werden die Polymerströme aus den Zonen I und II gemischt, wobei ggf. bereits Hilfsmittel wie Gleitmittel, Antistatika, Antioxidantien und Entformungshilfsmitteln zugesezt werden können.

Das Verhältnis der Mengenströme richtet sich nach dem gewünschten Eigenschaftsbild der Formmasse und wird so eingestellt, daß der Kautschukgehalt, ausgedrückt durch den Polybutadiengehalt, zwischen 2 und 50, vorzugsweise zwischen 4 und 25 Gew.% liegt.

Die Mischtemperatur liegt je nach der Temperatur der zugeführten Einzelströme zwischen 100°C und 300°C, vorzugsweise zwischen 120°C und 260°C.

Bemerkenswert an den Vorgängen in der Mischzone ist, daß die Polymerströme oberhalb des sog. Phasenumschlagpunktes gemischt werden, d.h. daß sie nicht homogen mischbar sind und demnach kein Phasenumschlag stattfindet, sondern die Kautschuk enthaltende Lösung gewissermaßen ausflockt und dieser dabei in der kohärenten Phase verteilt wird.

Die Polymermischung wird anschließend einer Entgasungszone zugeführt und mit den üblichen Mitteln vom Lösungsmittel befreit. Die Entgasungszone nimmt wegen der dort benötigten relativ hohen Temperatur außerdem die Aufgabe wahr, eine ausreichende Vernetzung der dispers verteilten Kautschukpartikel zu erreichen; dazu ist es ggf. zweckmäßig, eine längere Verweilzeit in der Entgasungszone, z.B. bei einer Temperatur von 220°C bis 290°C vorzusehen und evt. - zweckmäßig vor dem Eintritt der Polymermischung in die Entgasungszone - noch ein geeignetes Hilfsmittel zuzusetzen. Geeignet sind u.a. Radikalbildner wie Peroxide, Perketale oder Perester oder sog. C-C-labile Verbindungen wie Tetramethyldiphenylethan oder Hexaphenylethan.

### Beispiel 1:

Die Reaktionszone I besteht aus einem Rohr aus V2A-Stahl mit einem inneren Durchmesser 14 mm und einer Länge von 3000 mm.

Die Reaktionszone II besteht aus einem ebensolchen Rohr mit einem inneren Durchmesser von 44 mm und einer Länge von 3300 mm, das jedoch mit einem Kühlmantel ausgerüstet ist und in seiner ganzen Länge mit einem statischen Mischer vom Typ SMX der Firma Sulzer gefüllt ist.

Die Mischzone (III) besteht aus einem ebensolchen Rohr mit einem Durchmesser von 8 cm und einer Länge von 40 cm, das ebenfalls mit einem statischen Mischer ausgerüstet ist.

Das verwendete Lösungsmittel wurde destilliert und über Aluminiumoxid getrocknet. Styrol wurde destilliert und über Aluminiumoxid getrocknet. Butadien wurde über Molekularsieb getrocknet. 1,1-Diphenylethylen wurde über n-Butyllithium destilliert.

Die nachstehenden Mengenangaben, soweit nicht anders angegeben, beziehen sich auf das Gewicht.

Eine Mischung aus 70 Teilen Styrol mit 30 Teilen Cyclohexan wurde dem Kopf des Reaktionsrohres I mit einer Geschwindigkeit von 6,35 l/h zudosiert. Getrennt wurden 150 ml/h einer 1 %igen Lösung von sec.-Butyllithium in Cyclohexan zudosiert.

Nach einer kurzen Induktionsperiode steigt die Temperatur am Ausgang des Rohres auf 195°C. Der Umsatz erreicht über 99,99 %.

Parallel dazu wurden dem Reaktionsrohr II 4,3 kg/h einer Mischung von 3,72 Teilen Butadien, 2,48 Teilen Styrol und 35,1 Teilen Cyclohexan zugeführt, getrennt davon 240 ml/h einer 1-%igen Butyllithium-Lösung in Cyclohexan. Die Reaktionstemperatur betrug 72°C. Unter den gegebenen Bedingungen polymerisiert zunächst Butadien und wenn dieses im wesentlichen verbraucht ist, polymerisiert Styrol. Man erhielt ein Butadien-Styrol-Blockcopolymer mit sog. verschmiertem Übergang. Der Feststoffgehalt betrug 15 %.

Die aus den Reaktionszonen I und II austretenden Lösungen wurden mit einem - bezogen auf die eingesetzte Initiatormenge - Überschuß von Kohlendioxid und Wasser versetzt, bevor sie ohne weiteren Wärmeaustausch mit der Umgebung der Mischzone zugeführt wurden. Am Ende der Mischzone erhielt man eine 54 %ige Mischung aus dispers verteilter Kautschukphase und homogener Polystyrolphase. Diese Mischung wies eine Temperatur von 140°C auf und wurde wie üblich entgast und aufgearbeitet.

### Beispiel 2:

Der Versuch aus Beispiel 1 wurde wiederholt, wobei die Polymerströme aus den Reaktionszonen I und II beim Eintritt in den Mischer noch mit 0,1 % eines handelsüblichen Stabilisators (Irganox® 1076 der Ciba-Geigy AG) und 2 % Paraffinöl, jeweils bezogen auf den Polymeranteil des Gemisches versetzt wurden.

### Beispiel 3:

Der Reaktionszone I wurde eine Mischung von 80 Teilen Styrol und 20 Teilen Cyclohexan mit einer Geschwindigkeit von 8,3 l/h zudosiert. Zur Initiierung wurden 240 ml/h 1 %iger sec-Butyllithiumlösung in Cyclohexan zugeführt. Die Temperatur am Ende des Reaktionsrohres erreichte 230°C.

In der Reaktionszone II wurde ein SBS-Blockcopolymer hergestellt. Dazu wurden am Kopfende eine Mischung von 1,75 Teilen Styrol in 7,0 Teilen Cyclohexan mit einer Geschwindigkeit von 1,30 l/h sowie 160 ml/h einer 1-%igen sec.-Butyllithium-Lösung und stromabwärts eine Mischung aus 2,5 Teilen Butadien, 0,75 Teilen Styrol in 13,0 Teilen Cyclohexan mit einer Geschwindigkeit von 2,45 l/h zudosiert. Die Innentemperatur wurde auf 65°C gehalten.

Das gebildete Polymer wurde mit Isopropanol nachbehandelt.

### Beispiel 4:

Der Versuch von Beispiel 1 wurde wiederholt, indem anstelle von Styrol in der Reaktionszone I eine Mischung aus Styrol und 1,1 - Diphenylethylen im Verhältnis 3:1 eingesetzt wurde und stromabwärts 3 % Styrol, bezogen auf diese Mischung nachdosiert wurden.

Entsprechend wurde auch in der Reaktionszone II die eingesetzte Menge Styrol durch eine Mischung von Styrol und 1,1-Diphenylethylen im Verhältnis 3:1 ersetzt und stromabwärts wiederum 3 % Styrol nachdosiert.

Sodann wurde verfahren wie unter Beispiel 1 beschrieben.

### Beispiel 5:

Der Versuch in Beispiel 1 wurde wiederholt, indem die Initiatormenge der Reaktionszone I im Verhältnis 2:1 aufgeteilt wurde und die größere Menge am Kopf des Reaktionsrohres und die kleinere Menge stromabwärts zudosiert wurde.

## Patentansprüche

1. Verfahren zur kontinuierlichen Herstellung von schlagzäh modifizierten Formmassen auf der Grundlage von Polystyrol, die in einer Matrix des Styrol-Homopolymeren ein kautschukelastisches Styrol-Butadien-Blockcopolymerisat enthalten, wobei der Butadienanteil im Styrol-Butadien-Blockcopolymerisat 15 bis 80 Gew.-% und in der Formmasse insgesamt 2 bis 50 Gew.-% beträgt, dadurch gekennzeichnet, daß man
- Styrol in einer ersten Reaktionszone (I) anionisch und ohne Wärmeaustausch mit der Umgebung - wenn erforderlich unter Zusatz eines Lösungsmittels - bis zum vollständigen Umsatz polymerisiert und die lebenden Kettenenden in an sich bekannter Weise abbricht;
- in einer zweiten, parallel zur ersten betriebenen Reaktionszone (II) Styrol und Butadien unter Verwendung eines geeigneten Lösungsmittels anionisch und isotherm ebenfalls bis zum vollständigen Umsatz zu einem kautschukelastischen Blockcopolymer polymerisiert, dessen lebende Kettenenden entweder unmittelbar oder nach entsprechender Koppelung mittels einer multifunktionellen Verbindung mit einer protonenaktiven Substanz abbricht;
- die beiden Polymerströme in einer Mischzone (III) zusammenführt und gemeinsam in einer weiteren Zone (Entgasungszone) von Lösungsmittel und flüchtigen Bestandteilen befreit.

2. Verfahren nach Anspruch 1, dadurch gekennzeichnet, daß man das Verhältnis der Reaktionsteilnehmer aus den Reaktionszonen I und II so wählt, daß die Formmasse 4 bis 25 Gew.-% Polybutadien enthält.

3. Verfahren nach Anspruch 1, dadurch gekennzeichnet, daß in der Reaktionszone II Mischungen aus Polybutadien und Styrol-Butadien-Blockcopolymerisat hergestellt werden.

4. Verfahren nach Anspruch 1, dadurch gekennzeichnet, daß die Reaktionsprodukte aus den Reaktionszonen I und II oberhalb des Phaseninversionspunktes gemischt werden.

5. Verfahren nach Anspruch 1, dadurch gekennzeichnet, daß der Polymermischung vor Eintritt in die Entgasungszone ein Radikalbildner zugesetzt wird.

6. Verfahren nach Anspruch 1, dadurch gekennzeichnet, daß Styrol und/oder Butadien ganz oder teilweise durch deren technische Äquivalente ersetzt werden.

7. Thermoplastische, schlagzäh modifizierte Polystyrol-Formmasse mit einem Restgehalt von unter 50 ppm an Monomeren und unter 100 ppm an Oligomeren, wie sie nach dem Verfahren gemäß Anspruch 1 erhalten wird.

8. Verwendung einer nach einem der Ansprüche 1 bis 6 hergestellten Formmasse zur Herstellung von Folien, Platten oder Formkörpern.

## Claims

1. A process for continuous preparation of toughened molding materials based on polystyrene which contain an elastomeric styrene-butadiene block copolymer in a matrix of the styrene homopolymer, the butadiene proportion being from 15 to 80% by weight in the styrene-butadiene block copolymer and from 2 to 50% by weight in total in the molding material, wherein
- styrene is subjected to anionic polymerization in a first reaction zone (I), without heat exchange with the environment and, if required, with the addition of a solvent, until complete conversion is achieved, and the living chain ends are terminated in a manner known per se;
- in a second reaction zone (II) operated parallel to the first one, styrene and butadiene are subjected to isothermal anionic polymerization with the use of a suitable solvent, likewise to complete conversion, to give an elastomeric block copolymer whose living chain ends are terminated with a proton-active substance either immediately or after appropriate coupling by means of a polyfunctional compound;
- the two polymer streams are combined in a mixing zone (III) and together freed from solvent and volatile components in a further zone (devolatilization zone).

2. A process as claimed in claim 1, wherein the ratio of the reactants from reaction zones I and II is chosen so that the molding material contains from 4 to 25% by weight of polybutadiene.

3. A process as claimed in claim 1, wherein blends of polybutadiene and styrene-butadiene block copolymer are prepared in reaction zone II.

4. A process as claimed in claim 1, wherein the reaction products from reaction zones I and II are mixed above the phase inversion point.

5. A process as claimed in claim 1, wherein a free radical initiator is added to the polymer blend before entry into the devolatilization zone.

6. A process as claimed in claim 1, wherein all or some of the styrene or butadiene is replaced by its technical equivalent.

7. A thermoplastic, toughened polystyrene molding material, having a residual content of less than 50 ppm of monomers and less than 100 ppm of oligomers, as obtained by the process as claimed in claim 1.

8. A method of using a molding material prepared as claimed in any of claims 1 to 6 for the production of films, sheets or moldings.

## Revendications

1. Procédé pour la préparation en continu de masses à mouler modifiées à résistance élevée aux chocs sur un substrat de polystyrène, qui contiennent dans une matrice de l'homopolymère de styrène, un copolymère séquencé de styrène-butadiène dont l'élasticité rappelle celle du caoutchouc, dans lequel la fraction de butadiène dans le copolymère séquencé de styrène-butadiène s'élève de 15 à 80% en poids et, dans la masse à mouler, au total de 2 à 50% en poids, caractérisé en ce que
- dans une première zone réactionnelle (I), on polymérise du styrène par voie anionique et sans échanges thermiques avec l'environnement - en cas de nécessité, avec addition d'un solvant - jusqu'à la conversion complète et on rompt les extrémités de chaînes vivantes d'une manière connue en soi;
- dans une deuxième zone réactionnelle (II) exploitée parallèlement à la première, on polymérise du styrène et du butadiène en utilisant un solvant approprié, dans des conditions anioniques et isothermiques, également jusqu'à la conversion complète pour obtenir un copolymère séquencé dont l'élasticité rappelle celle du caoutchouc, dont on rompt les extrémités de chaînes vivantes, soit immédiatement, soit après couplage correspondant au moyen d'un composé multifonctionnel avec une substance à activité protonique;
- dans une zone de mélange (III), on rassemble les deux courants polymères et, dans une zone ultérieure (zone de dégazage), on les libère en même temps du solvant et des constituants volatils.

2. Procédé selon la revendication 1, caractérisé en ce qu'on sélectionne le rapport des participants réactionnels des zones réactionnelles I et II de telle sorte que la masse à mouler contienne du polybutadiène à raison de 4 à 25% en poids.

3. Procédé selon la revendication 1, caractérisé en ce que, dans la zone réactionnelle II, on prépare des mélanges de polybutadiène et d'un copolymère séquencé de styrène-butadiène.

4. Procédé selon la revendication 1, caractérisé en ce qu'on mélange les produits réactionnels des zones réactionnelles I et II au-dessus du point d'inversion de phase.

5. Procédé selon la revendication 1, caractérisé en ce qu'on ajoute au mélange polymère, un formateur de radicaux avant l'entrée dans la zone de dégazage.

6. Procédé selon la revendication 1, caractérisé en ce qu'on remplace le styrène et/ou le butadiène, en tout ou en partie, par leurs équivalents techniques.

7. Masse à mouler thermoplastique de polystyrène modifié à résistance élevée aux chocs, possédant une teneur résiduelle en monomères inférieure à 50 ppm et en oligomères inférieure à 100 ppm, telle qu'on l'obtient conformément au procédé selon la revendication 1.

8. Utilisation d'une masse à mouler préparée conformément à l'une quelconque des revendications 1 à 6, pour la fabrication de feuilles, de panneaux ou de corps moulés.
